# EUROPEAN PATENT APPLICATION

(11) **EP 4 786 328 A1**
(43) Date of publication of application: **05.08.2026**
(21) Application number: 24872906.3
(22) Date of filing: 25.09.2024
(51) Int. Cl.: B63H 21/38, B63B 17/00, B63B 25/16, F17C 13/00, F17C 9/00, F02M 21/02

(54) **FUEL SUPPLY SYSTEM**

(30) Priority: 26.09.2023 KR 20230129794
(71) Applicant: HD Korea Shipbuilding & Offshore Engineering Co., Ltd., Seongnam-si, Gyeonggi-do 13553 (KR)
(72) Inventor: JEONG, Jae Hui, Seongnam-si, Gyeonggi-do 13553 (KR); LEE, Chang Woo, Seongnam-si, Gyeonggi-do 13553 (KR); AHN, Yeong Jong, Seongnam-si, Gyeonggi-do 13553 (KR); KIM, Min Seong, Seongnam-si, Gyeonggi-do 13553 (KR)
(74) Representative: Beck Greener LLP
(86) International application number: PCT/KR2024/014489
(87) International publication number: WO 2025/071198

(57) **Abstract**

A fuel supply system according to the present invention comprises: a fuel tank in which fuel gas is stored, the fuel tank being capable of accommodating the boil-off gas of the fuel gas and purge gas that can be used for a purging operation; a fuel supply line for supplying fuel from the fuel tank to an engine; a purging gas generation part for generating purging gas suitable for use in the purging operation by using a mixed gas of the boil-off gas and the purge gas accommodated in the fuel tank; a purging line for purging the engine and a pipe with the purging gas generated by the purging gas generation part; and a recovery line connected to the purging line so that the purging gas used for the purging operation is recovered in the fuel tank.

## Description

### [Technical Field]

### CROSS-REFERENCE TO RELATED APPLICATIONS

This application claims priority under 35 U.S.C. § 119 to Korean Patent Application No. 10-2023-0129794 filed on September 26, 2023, in the Korean Intellectual Property Office, the disclosures of which are incorporated by reference herein in their entireties.

The present disclosure relates to a fuel supply system, and more particularly, to a fuel supply system intended to solve toxic fuel gas emission and purge gas loss through closed-loop purging of a purge gas.

### [Background Art]

In a general fuel system, a fuel used to generate power for an engine remains in the engine or a pipe. For example, when methanol is used as a fuel, the methanol is a low flash point fuel, and thus, when the methanol remains in the engine or the pipe, there is a risk of fire and explosion. As another example, when ammonia is used as the fuel, there is a risk of toxicity when the ammonia leaks. Thus, a fuel supply system for discharging the fuel remaining inside such an engine system should be installed.

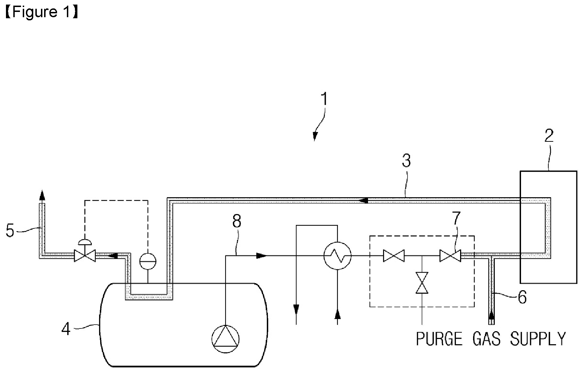

FIG. 1 is a view illustrating a fuel supply system (1) according to the related art. In general, the fuel supply system is configured to push and discharge the fuel remaining inside the engine and the pipe using an inert gas such as nitrogen. Fuel in a fuel tank (4) is supplied to an engine (2) through a fuel supply line (8) and is used for power generation. When the engine is stopped and a purging operation is performed, a purge gas is supplied through a purge gas supply line (6) to purge the engine (2) and the pipe. For reference, while the purging operation is performed, a fuel shutoff valve (7) is closed, thereby preventing the purge gas from flowing into the fuel supply line (8). The purge gas used in the purging operation flows into the fuel tank (4) through a fuel recovery line (3) together with residual fuel in the engine and the pipe. Accordingly, a pressure inside the fuel tank (4) is increased, and to prevent overpressure (e.g., 0.2 bar), a fuel gas and the purge gas in the fuel tank (4) are discharged to the atmosphere through a vent line (5).

Since the purge gas is discharged to the exhaust and consumed, a new purge gas should be supplied again through the purge gas supply line (6) for a next purging operation, and thus purge gas loss occurs.

### [Disclosure]

### [Technical Problem]

Thus, the present disclosure is intended to solve a problem of a fuel supply system according to the related art and provides a fuel supply system that prevents loss of a purge gas by forming a closed loop in which the purge gas circulates inside a fuel system.

### [Technical Solution]

A fuel supply system according to an embodiment of the present disclosure includes a fuel tank in which a fuel gas is stored, the fuel tank being capable of accommodating an evaporated gas of the fuel gas and a purge gas usable for a purging operation, a fuel supply line that supplies a fuel from the fuel tank to an engine, a purging gas generating unit that generates a purging gas suitable for use in the purging operation using a mixture gas of the evaporated gas and the purge gas accommodated in the fuel tank, a purging line that purges the engine and a pipe with the purging gas generated by the purging gas generating unit, and a recovery line that is connected to the purging line and recovers the purging gas used in the purging operation to the fuel tank.

According to the embodiment of the present disclosure, the fuel supply system may include a supply valve that is provided in the purging line and adjusts a flow rate of the purging gas.

According to the embodiment of the present disclosure, the fuel supply system may include a purge gas supply line that is connected to the fuel tank and supplies the purge gas.
[1] According to the embodiment of the present disclosure, the fuel supply system may include a vent line that is connected to the fuel tank and discharges the mixture gas inside the fuel tank.

According to the embodiment of the present disclosure, the purging gas generating unit may include a compressor that compresses the mixture gas stored in the fuel tank and a buffer tank that is provided at a rear end of the compressor and temporarily stores the mixture gas compressed by the compressor.

According to the embodiment of the present disclosure, the purging gas generating unit may include a compressor that compresses the mixture gas stored in the fuel tank and a purging gas purifier that is provided at a rear end of the compressor and separates the evaporated gas from the compressed mixture gas.

According to the embodiment of the present disclosure, the evaporated gas or a liquid fuel separated by the purging gas purifier may be recovered to the fuel tank through a drain line.

According to the embodiment of the present disclosure, the purging gas purifier may include an absorption-type purifier using an absorbent, a wastewater tank that stores the absorbent used in the absorption-type purifier, and a degassing device that separates a fuel absorbed in the absorbent in the wastewater tank.

According to the embodiment of the present disclosure, the purging gas purifier may include an adsorption-type purifier using an adsorbent and an adsorption-type supply valve that is provided between the compressor and the adsorption-type purifier and adjusts a supply pressure of the mixture gas to the adsorption-type purifier.

According to the embodiment of the present disclosure, the purging gas purifier may include a heat exchanger that cools the mixture gas compressed by the compressor and a gas-liquid separator that is provided at a rear end of the heat exchanger and separates a liquid fuel and the purging gas from the mixture gas.

According to the embodiment of the present disclosure, the purging gas purifier may further include a buffer tank that is provided at a rear end of the gas-liquid separator and temporarily stores the purging gas separated by the gas-liquid separator.

According to an embodiment of the present disclosure, in the recovery line, a residual fuel may be recovered together with the purging gas used in the purging operation.

According to an embodiment of the present disclosure, a pressure reducing valve that reduces a pressure of the purging gas used in the purging operation may be provided in the recovery line.

According to an embodiment of the present disclosure, the evaporated gas of the fuel gas may be methanol or ammonia, the purge gas may be nitrogen, and the purging gas may be a mixture gas of methanol or ammonia and nitrogen or a nitrogen gas.

A fuel supply system according to another embodiment of the present disclosure includes a fuel tank in which a fuel gas is stored, the fuel tank being capable of accommodating an evaporated gas of the fuel gas and a purge gas usable for a purging operation, a fuel supply line that supplies a fuel from the fuel tank to an engine, a purging gas generating unit that generates a purging gas suitable for use in the purging operation using a mixture gas of the evaporated gas and the purge gas accommodated in the fuel tank, a drain line that recovers the evaporated gas or a liquid fuel separated by the purging gas generating unit to the fuel tank, a purging line that purges the engine and a pipe with the purging gas generated by the purging gas generating unit, and a recovery line that is connected to the purging line and recovers the purging gas used in the purging operation to the fuel tank.

### [Advantageous Effects]

According to the present disclosure, since a purge gas flows along a closed loop circulating inside a fuel system, a purging operation may be performed without loss of the purge gas.

According to the present disclosure, since resupply of the purge gas is not required, it is possible to solve a problem in which a pressure inside a fuel tank is excessively increased due to continuous supply of the purge gas, and thus a toxic fuel gas together with the purge gas should be frequently discharged.

### [Description of Drawings]

FIG. 1 is a view of a fuel supply system according to the related art.
FIG. 2 illustrates a fuel supply system according to the present disclosure.
FIG. 3 illustrates a fuel supply system of a purge gas generating unit according to a first embodiment of the present disclosure.
FIG. 4 illustrates a fuel supply system of a purge gas generating unit according to a (2-1)^{th} embodiment of the present disclosure.
FIG. 5 illustrates a fuel supply system of a purge gas generating unit according to a (2-2)^{th} embodiment of the present disclosure.
FIG. 6 illustrates a fuel supply system of a purge gas generating unit according to a (2-3)^{th} embodiment of the present disclosure.

### [Mode for Invention]

Hereinafter, some embodiments of the present disclosure will be described in detail with reference to the exemplary drawings. In adding reference numerals to components of each drawing, it should be noted that identical or equivalent components are designated by an identical numeral even when they are displayed on other drawings. Further, in describing the embodiment of the present disclosure, a detailed description of the related known configuration or function will be omitted when it is determined that it interferes with the understanding of the embodiment of the present disclosure.

Further, in the description of components of the embodiments of the present disclosure, the terms such as first, second, A, B, (a) and (b) may be used. These terms are merely intended to distinguish one component from other components, and the terms do not limit the nature, order, or sequence of the components. It should be understood that when one component is "connected", "coupled" or "joined" to another component, the former may be directly connected or jointed to the latter or may be "connected", "coupled" or "joined" to the latter with a third component interposed therebetween.

In the present specification, a front-rear direction, a left-right direction, and an up-down direction are referred to for convenience of description and may be directions perpendicular to each other. However, these directions are determined relative to a direction in which a gas cutting apparatus is disposed, and the up-down direction may not necessarily mean a vertical direction.

Referring to FIG. 1, a fuel supply system 100 according to an embodiment of the present disclosure will be described. The fuel supply system 100 includes a fuel tank 10 in which a fuel gas is stored, the fuel tank 10 being capable of accommodating an evaporated gas of the fuel gas and a purge gas usable for a purging operation, a fuel supply line 340 for supplying a fuel from the fuel tank 10 to an engine, a purging gas generating unit 200 which generates a purging gas suitable for use in the purging operation using the evaporated gas and the purge gas accommodated in the fuel tank 10, a purging line 310 for purging the engine and a pipe with the purging gas generated by the purging gas generating unit 200, and a recovery line 320 which is connected to the purging line 310 and recovers the purging gas used in the purging operation to the fuel tank 10.

The fuel gas may be used as a term encompassing all gas fuels that are generally stored in a liquid state, such as liquefied petroleum gas (LPG), ethylene, ammonia, methanol, and hydrogen, and a fuel which is not in a liquid state due to heating or pressing may also be expressed as the fuel gas for convenience. This may be applied to the evaporated gas in the same manner.

An inert gas such as nitrogen or argon may be used as the purge gas, but the present disclosure is not limited thereto. The purging gas is used as a term distinguished from the purge gas in the specification. The purging gas refers to a gas that is actually used in the purging operation, is generated by the purging gas generating unit 200, and flows along the purging line 310. The purging gas may be a mixture gas of the evaporated gas and the purge gas or may be a pure purge gas. This may be changed depending on a treatment method of the purging gas generating unit 200, which will be described below.

The fuel gas may be stored in the fuel tank 10, and the evaporated gas of the fuel gas and the purge gas that may be used for the purging operation may be accommodated together in an upper portion of the fuel tank. A purge gas supply line 330 may be connected to the fuel tank 10 to supply the purge gas to the fuel tank 10. This purge gas may also be used to prevent a decrease in a pressure inside the fuel tank 10. A regulator 12 for adjusting a flow rate of the purge gas may be provided in the purge gas supply line 330. When an amount of the purge gas for maintaining a pressure of the fuel tank 10 is insufficient, the regulator 12 may be automatically opened to additionally supply the purge gas through the purge gas supply line 330 in order to prevent structural damage to the fuel tank 10.

In a purge system according to the present disclosure, a closed loop of the purge gas is configured, and thus when the purge gas is supplied to the fuel tank 10 through the purge gas supply line 330 once, subsequent resupply of the purge gas is not required.

Further, since the resupply of the purge gas is not required, it is possible to solve a problem in which the pressure inside the fuel tank 10 is excessively increased due to continuous supply of the purge gas, and thus a toxic fuel gas (e.g., methanol or ammonia) together with the purge gas should be discharged frequently.

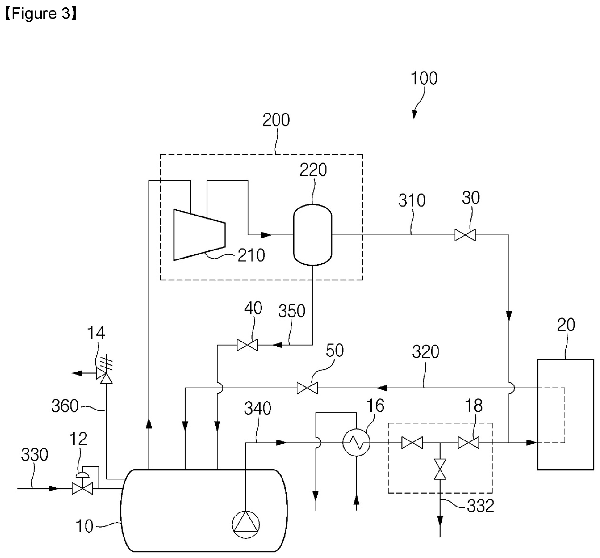

The purging gas generating unit 200 generates the purging gas suitable for use in the purging operation using a mixture gas inside the fuel tank 10. The fuel liquefied or the evaporated gas separated by the purging gas generating unit 200 may be recovered to the fuel tank 10 through a drain line 350. A detailed configuration thereof will be described in detail with reference to FIGS. 3 to 6.

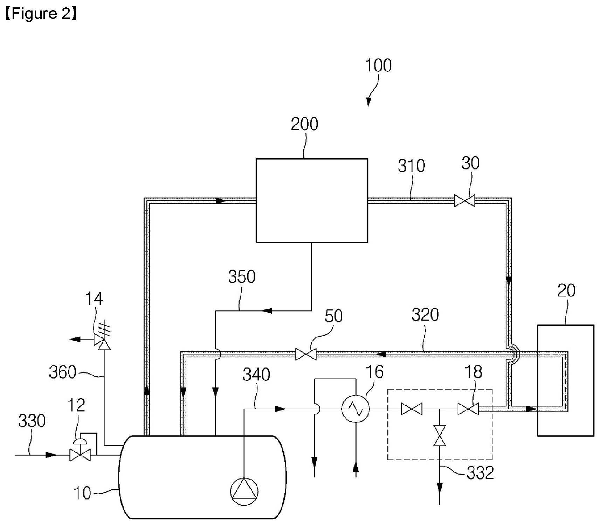

Interiors of the engine and the pipe are purged using the purging gas generated by the purging gas generating unit 200. According to FIG. 2, the purging line 310 is illustrated as a line extending from the pipe connected to the purging gas generating unit 200 and passing through a partial pipe of the fuel supply line 340 and the interior of the engine 20 but may be understood as a line circulating through equipment and the pipe required for the purging operation. A supply valve 30 may be provided in the purging line 310 to adjust a flow rate of the purging gas.

According to FIG. 2, a heat exchanger 16 and a fuel shut-off valve 18 may be illustrated in the fuel supply line 340, but may be replaced with other components depending on the fuel system. A fuel discharge line 332 for discharging the fuel when the engine is stopped may be provided in the fuel supply line 340.

A vent line 360 may be connected to the fuel tank 10 to discharge the mixture gas inside the fuel tank 10. A relief valve 14 may be provided in the vent line 360, and therefore, a pressure inside the fuel tank 10 may be prevented from being overpressure.

The recovery line 320 is a line which is connected to the purging line 310 and recovers the purging gas used in the purging operation to the fuel tank 10. In the recovery line 320, residual fuel may be recovered together with the purging gas used in the purging operation. Thus, the purge gas flows along the fuel tank 10, the purging gas generating unit 200, the purging line 310, and the recovery line 320, and is then recovered back to the fuel tank 10. FIG. 2 illustrates closed loop flow of the purge gas. Since the purge gas flows along the closed loop, the purging operation may be performed without loss (by reuse) of the purge gas. A pressure reducing valve 50 for reducing a pressure of the purging gas used in the purging operation may be provided in the recovery line 320.

### <First Embodiment>

FIG. 3 illustrates the purging gas generating unit 200 according to a first embodiment. The purging gas generating unit 200 may include a compressor 210 which compresses the mixture gas stored in the fuel tank and a buffer tank 220 which is provided at a rear end of the compressor 210 and temporarily stores the mixture gas compressed by the compressor 210.

The compressor 210 compresses the mixture gas of the evaporated gas and the purge gas. The high-pressure mixture gas may be used as the purging gas, may flow along the purging line 310 and the recovery line 320, and may then be recovered back to the fuel tank 10. The high-pressure mixture gas may contain a portion of the evaporated gas of the fuel gas, but when a mixing ratio is lower than an allowable reference value (e.g., 5% or less in the case of methanol), the purging operation may be performed even with the mixture gas including the evaporated gas of the fuel gas.

The buffer tank 220 serves to temporarily store the high-pressure purging gas. An amount of the purging gas used for the purging operation is small compared to a total amount of the purge gas included the fuel tank 10, and thus the purging gas may be sufficiently accommodated in the buffer tank 220. A mass (e.g., at least 440 kg) of the purge gas that may be accommodated in the fuel tank 10 is four times or more a mass (e.g., up to 110 kg) of the purging gas used for a single purging operation. In the related art, the purging gas (e.g., 110 kg) is supplied through the purge gas supply line 330 whenever the purging operation is performed. However, in the present embodiment, the purging gas may be initially supplied to the fuel tank 10 through the purge gas supply line 330 once and then may be stored and purged in the buffer tank 220. Thereafter, the purge gas recovered to the fuel tank 10 and stored in the buffer tank 220 may recirculate. The numerical values such as 440 kg and 110 kg are by way of example, and the present disclosure is not limited thereto.

Since the high-pressure purging gas is temporarily stored in the buffer tank 220, a capacity of the compressor 210 may be reduced. That is, the high-pressure purging gas is stored in advance in the buffer tank 220, the high-pressure purging gas is additionally generated by the compressor 210 during the purging operation, and thus the high-pressure purging gas is discharged together. Thus, the buffer tank 220 is provided, and thus even when the capacity of the compressor is reduced, a sufficient pressure of the purging gas may be maintained.

When the compressor 210 is operated for a long time, a large amount of the gas inside the fuel tank 10 is stored in the buffer tank 220, the amount of the gas inside the fuel tank 10 is decreased, and thus the pressure of the fuel tank 10 is reduced. Further, when the compressor 210 is operated for a short time, a small amount of the gas inside the fuel tank 10 is stored in the buffer tank 220, there is no significant change in the amount of the gas inside the fuel tank 10, and thus the pressure of the fuel tank 10 may be maintained. In this way, the pressure inside the fuel tank 10 may be adjusted by adjusting use of the compressor 210.

### <Second Embodiment>

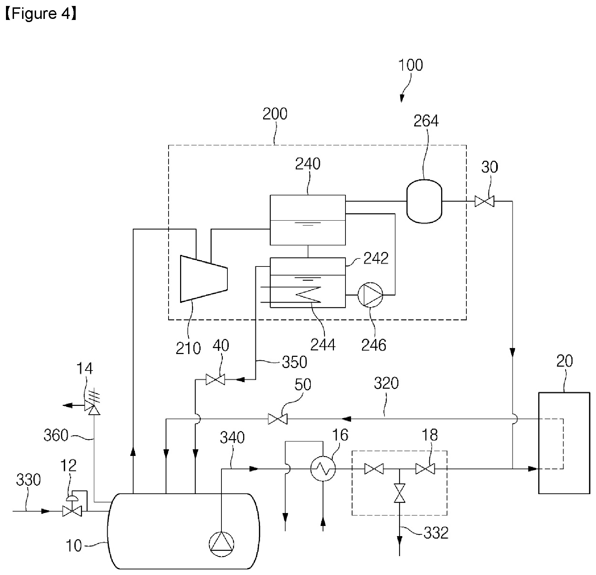

FIGS. 4 to 6 illustrate the purging gas generating unit 200 according to a second embodiment. The purging gas generating unit 200 includes the compressor 210 which compresses the mixture gas stored in the fuel tank 10 and a purging gas purifier 230 which is provided at a rear end of the compressor 210 and separates the evaporated gas from the compressed mixture gas. The evaporated gas may be separated by the purging gas purifier 230, the purity of the purge gas may be increased, and thus an allowable reference value (e.g., 5% or less in the case of methanol) of the purging gas may be satisfied. The high-purity purging gas passing through the purging gas purifier 230 flows along the purging line 310 and the recovery line 320, and is then recovered back to the fuel tank 10.

According to a specific purification method, the purging gas purifier 230 is classified into a (2-1)^{th} embodiment (absorption-type purifier), a (2-2)^{th} embodiment (adsorption-type purifier), and a (2-3)^{th} embodiment (gas-liquid separator).

### <(2-1)^{th} Embodiment>

Referring to FIG. 4, the purging gas purifier 230 may include an absorption-type purifier 240 using an absorbent. For example, when the evaporated gas of the fuel gas is methanol or ammonia and the purge gas is nitrogen, a high-purity nitrogen gas may be generated using an absorbent. The absorbent used in the absorption-type purifier 240 is stored in a wastewater tank 242. To recover the absorbed fuel, a degassing device 244 which separates the fuel by heating the absorbent in the wastewater tank 242 may be used. Further, the absorbent inside the wastewater tank 242 may be supplied to the absorption-type purifier 240 using an absorbent pump 246. The separated evaporated gas may be recovered to the fuel tank 10 through the drain line 350. A drain valve 40 may be provided in the drain line 350.

The purging gas purifier 230 according to the (2-1)^{th} embodiment may further include a buffer tank 264 which is provided at a rear end of the absorption-type purifier 240 and temporarily stores the high-purity purging gas separated by the absorption-type purifier 240. Since the buffer tank 264 performs the same function as the buffer tank 220, a detailed description thereof will be omitted.

### <(2-2)^{th} Embodiment>

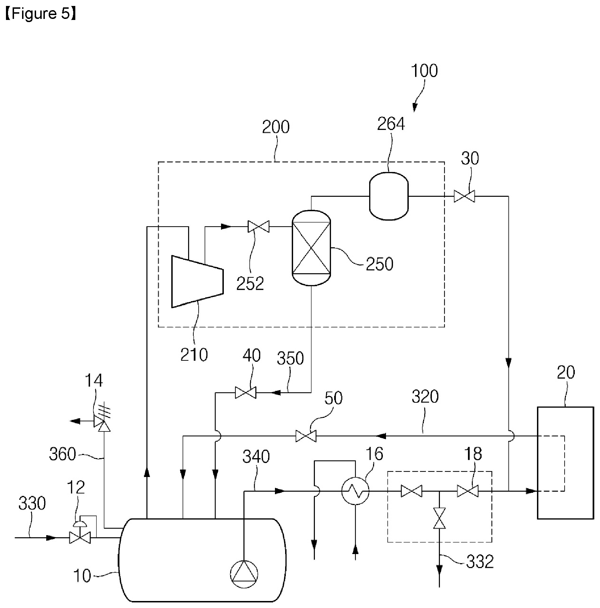

Referring to FIG. 5, the purging gas purifier 230 may include an adsorption-type purifier 250 using an adsorbent. For example, when the evaporated gas of the fuel gas is methanol or ammonia and the purge gas is nitrogen, a high-purity nitrogen gas may be generated using an adsorbent. An adsorption-type supply valve 252 for adjusting a supply pressure of the mixture gas to the adsorption-type purifier 250 may be provided between the compressor 210 and the adsorption-type purifier 250.

When the compressor 210 is operated, the adsorption-type supply valve 252 is opened, and the supply valve 30 and the drain valve 40 are closed, a high-pressure environment may be formed inside the adsorption-type purifier 250. On the other hand, when the compressor 210 is stopped, the adsorption-type supply valve 252 is closed, and the supply valve 30 or the drain valve 40 is opened, a low-pressure environment may be formed inside the adsorption-type purifier 250. When this low-pressure environment is formed, the evaporated gas may be desorbed from the adsorbent. The desorbed evaporated gas may be recovered to the fuel tank 10 through the drain line 350. The drain valve 40 may be provided in the drain line 350.

The purging gas purifier 230 according to the (2-2)^{th} embodiment may further include a buffer tank 264 which is provided at a rear end of the adsorption-type purifier 250 and temporarily stores the high-purity purging gas separated by the adsorption-type purifier 250. Since the buffer tank 264 performs the same function as the buffer tank 220, a detailed description thereof will be omitted.

### <(2-3)^{th} Embodiment>

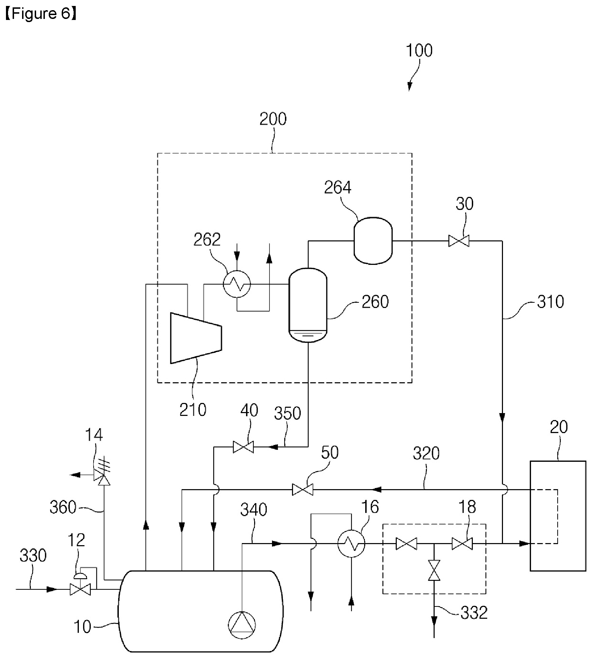

Referring to FIG. 6, the purging gas purifier 230 may include a heat exchanger 262 which cools the mixture gas compressed by the compressor 210 and a gas-liquid separator 260 which is provided at a rear end of the heat exchanger 262 and separates a liquid fuel and the purging gas from the mixture gas.

When the mixture gas is compressed by the compressor 210, a high-temperature high-pressure mixture gas is formed, and when the high-temperature high-pressure mixture gas is cooled by the heat exchanger 262, the mixture gas is converted into a low-temperature high-pressure state, and thus the evaporated gas is condensed into the liquid fuel. The liquid fuel is collected in a lower portion of the gas-liquid separator 260, the high-purity purge gas is collected in an upper portion of the gas-liquid separator 260, and thus the liquid fuel and the purge gas are separated.

The purging gas purifier 230 according to the (2-3)^{th} embodiment may further include the buffer tank 264 which is provided at a rear end of the gas-liquid separator 260 and temporarily stores the high-purity purging gas separated by the gas-liquid separator 260. Since the buffer tank 264 performs the same function as the buffer tank 220, a detailed description thereof will be omitted.

The above description is merely illustrative of the technical spirit of the present disclosure, and those skilled in the art to which the present disclosure belongs may make various modifications and changes without departing from the essential features of the present disclosure. Thus, the embodiments disclosed in the present disclosure are not intended to limit the technology spirit of the present disclosure, but are intended to describe the present disclosure, and the scope of the technical spirit of the present disclosure is not limited by these embodiments. The scope of protection of the present disclosure should be interpreted by the appended claims, and all technical spirits within the scope equivalent thereto should be interpreted as being included in the scope of the present disclosure.

### [Description of Reference Numerals]

100: Fuel supply system
10: Fuel tank 20: Engine
30: Supply valve 40: Drain valve
200: Purging gas generating unit
210: Compressor 220: Buffer tank
230: Purging gas purifier 240: Absorption-type purifier
242: Wastewater tank 244: Degassing device
246: Absorbent pump 250: Adsorption-type purifier
252: Adsorption-type supply valve 260: Gas-liquid separator
262: Heat exchanger 264: Buffer tank
310: Purging line 320: Recovery line
330: Purge gas supply line
332: Fuel discharge line
340: Fuel supply line 350: Drain line
360: Vent line

## Claims

1. A fuel supply system comprising:
a fuel tank in which a fuel gas is stored, the fuel tank being capable of accommodating an evaporated gas of the fuel gas and a purge gas usable for a purging operation;
a fuel supply line configured to supply a fuel from the fuel tank to an engine;
a purging gas generating unit configured to generate a purging gas suitable for use in the purging operation using a mixture gas of the evaporated gas and the purge gas accommodated in the fuel tank;
a purging line configured to purge the engine and a pipe with the purging gas generated by the purging gas generating unit; and
a recovery line connected to the purging line and configured to recover the purging gas used in the purging operation to the fuel tank.

2. The fuel supply system of claim 1, comprising:
a supply valve provided in the purging line and configured to adjust a flow rate of the purging gas.

3. The fuel supply system of claim 1, comprising:
a purge gas supply line connected to the fuel tank and configured to supply the purge gas.

4. The fuel supply system of claim 1, comprising:
a vent line connected to the fuel tank and configured to discharge the mixture gas inside the fuel tank.

5. The fuel supply system of claim 1, wherein the purging gas generating unit includes:
a compressor configured to compress the mixture gas stored in the fuel tank; and
a buffer tank provided at a rear end of the compressor and configured to temporarily store the mixture gas compressed by the compressor.

6. The fuel supply system of claim 1, wherein the purging gas generating unit includes:
a compressor configured to compress the mixture gas stored in the fuel tank; and
a purging gas purifier provided at a rear end of the compressor and configured to separate the evaporated gas from the compressed mixture gas.

7. The fuel supply system of claim 6, wherein the evaporated gas or a liquid fuel separated by the purging gas purifier is recovered to the fuel tank through a drain line.

8. The fuel supply system of claim 6, wherein the purging gas purifier includes:
an absorption-type purifier using an absorbent;
a wastewater tank configured to store the absorbent used in the absorption-type purifier; and
a degassing device configured to separate a fuel absorbed in the absorbent in the wastewater tank.

9. The fuel supply system of claim 8, wherein the purging gas purifier further includes:
a buffer tank provided at a rear end of the absorption-type purifier and configured to temporarily store the purging gas purified by the absorption-type purifier.

10. The fuel supply system of claim 6, wherein the purging gas purifier includes:
an adsorption-type purifier using an adsorbent; and
an adsorption-type supply valve provided between the compressor and the adsorption-type purifier and configured to adjust a supply pressure of the mixture gas to the adsorption-type purifier.

11. The fuel supply system of claim 10, wherein the purging gas purifier further includes:
a buffer tank provided at a rear end of the adsorption-type purifier and configured to temporarily store the purging gas purified by the adsorption-type purifier.

12. The fuel supply system of claim 6, wherein the purging gas purifier includes:
a heat exchanger configured to cool the mixture gas compressed by the compressor; and
a gas-liquid separator provided at a rear end of the heat exchanger and configured to separate a liquid fuel and the purging gas from the mixture gas.

13. The fuel supply system of claim 12, wherein the purging gas purifier further includes:
a buffer tank provided at a rear end of the gas-liquid separator and configured to temporarily store the purging gas separated by the gas-liquid separator.

14. The fuel supply system of claim 1, wherein a pressure reducing valve configured to reduce a pressure of the purging gas used in the purging operation is provided in the recovery line.

15. A fuel supply system comprising:
a fuel tank in which a fuel gas is stored, the fuel tank being capable of accommodating an evaporated gas of the fuel gas and a purge gas usable for a purging operation;
a fuel supply line configured to supply a fuel from the fuel tank to an engine;
a purging gas generating unit configured to generate a purging gas suitable for use in the purging operation using a mixture gas of the evaporated gas and the purge gas accommodated in the fuel tank;
a drain line configured to recover the evaporated gas or a liquid fuel separated by the purging gas generating unit to the fuel tank;
a purging line configured to purge the engine and a pipe with the purging gas generated by the purging gas generating unit; and
a recovery line connected to the purging line and configured to recover the purging gas used in the purging operation to the fuel tank.
